Europäisches Patentamt

European Patent Office

Office européen des brevets

(19)

(11) Veröffentlichungsnummer : **0 350 938 B1**

# (12) EUROPÄISCHE PATENTSCHRIFT

(45) Veröffentlichungstag der Patentschrift :
**01.07.92 Patentblatt 92/27**

(51) Int. Cl.$^5$ : **B23B 27/16**

(21) Anmeldenummer : **89112882.9**

(22) Anmeldetag : **13.07.89**

(54) **Klemmhalter für Rundschneidplatten.**

Verbunden mit 89908169.9/0428544
(europäische
Anmeldenummer/Veröffentlichungsnummer)
durch Entscheidung vom 22.10.91.

(30) Priorität : **14.07.88 DE 3823907**

(43) Veröffentlichungstag der Anmeldung :
**17.01.90 Patentblatt 90/03**

(45) Bekanntmachung des Hinweises auf die
Patenterteilung :
**01.07.92 Patentblatt 92/27**

(84) Benannte Vertragsstaaten :
**AT BE CH DE ES FR GB GR IT LI LU NL SE**

(56) Entgegenhaltungen :
**FR-A- 1 524 276**
**GB-A- 671 005**
**US-A- 4 111 587**
**US-A- 4 552 491**

(73) Patentinhaber : **Stora Feldmühle**
**Aktiengesellschaft**
**Feldmühleplatz 1**
**W-4000 Düsseldorf 11 (DE)**

(72) Erfinder : **Kraft, Harald, Dipl.-Ing.**
**Aspachstrasse 9**
**W-7336 Uhingen (DE)**
Erfinder : **Eder, Otto**
**Hermann-Hesse-Weg 7**
**W-7316 Köngen (DE)**

EP 0 350 938 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Werkzeng, das einen becherförmigen Einsatz, eine Rundschneidplatte und einen Klemmhalter aufweist, der im wesentlichen aus einem Schaft mit einer eine Ausnehmung aufweisendem Klemmhalterkopf zur Aufnahme von Rundschneidplatten besteht, die als Unterseite ein zentrierendes Profil aufweisen und mit diesem in die komplementär ausgestaltete Ausnehmung des Halters eingreifen, wobei der Klemmhalterkopf mit einer Lagerbohrung zur Aufnahme eines becherförmigen Einsatzes versehen ist, der becherförmige Einsatz mit einem zylindrischen Ansatz in die Lagerbohrung eingreift und das zentrierende Profil der Rundschneidplatte als Kegelstumpf ausgeführt ist, siehe De-A-2 260 097.

Klemmhalter für Rundschneidplatten sind in der DE-B-11 36 185, der GB-A-465,537 und der GB-A-1,094,614 und der DE-A-22 60 097 beschrieben. Allen Schriften ist gemeinsam, daß beim Spannen der Rundschneidplatte gleichzeitig ein Zentrieren erfolgen soll. Die Schneidplatten sind daher mit kegelstumpfförmigen Ausnehmungen - DE-B-11 36 185 - oder mit zentrierenden Ansätzen an der Unterseite in Form von Kugelabschnitten - GB-A-465,537 -, Kegelstümpfen - GB-A-1,094,614 und DE-A-22 60 097 oder Pyramidenstümpfen - DE-A-22 60 097 - versehen. Die entsprechenden Aufnahmen im Klemmhalter müssen komplementär ausgestaltet sein, um einen einwandfreien Sitz der Schneidplatte zu gewährleisten. Kugelabschnittförmige Sitze und entsprechend hohlkugelförmige Ausnehmungen sind ausgesprochen schwierig zu fertigen, wenn eine satte Auflage gewährt werden soll. Analoges gilt für pyramidenförmige Ausnehmungen. Am einfachsten sind also Kegelstümpfe und entsprechende dazugehörende konische Bohrungen zu fertigen. Damit ist rein theoretisch das Problem der zentrierenden Befestigung gelöst. Die Praxis ergibt jedoch, daß eine Fertigung nur unter Einhaltung festgelegter Toleranzen erfolgen kann, wobei man aus Wirtschaftlichkeitsgründen bemüht ist, diese Toleranzen möglichst grob festlegen zu können. Daraus ergibt sich automatisch, daß eine exakte Fassung zwischen dem konischen Ansatz einer Rundschneidplatte und der trichterförmigen Ausnehmung in der Aufnahme nur in dem Fall zu erreichen ist, wenn alle Toleranzen Null sind oder sich Plus- und Minustoleranzen von Konus und konischer Bohrung zu Null ergänzen. Anders ausgedrückt, es ist äußerst unwahrscheinlich, daß die Schneidplatte in ihrem Sitz voll aufliegt und im Bereich des Konus gleichzeitig spielfrei geführt wird.

Der vorliegenden Erfindung liegt damit die Aufgabe zugrunde, ein zentrierendes Klemmen von Rundschneidplatten zu ermöglichen, wobei die Rundschneidplatte nach dem Spannvorgang fest und plan auf dem Boden aufliegt und gleichzeitig durch Anliegen weiterer Bereiche des konischen Ansatzes an einem Teil des Klemmhalters zentriert und geführt wird.

Diese Aufgabe wird bei einem gattungsgemäßen Klemmhalter durch die Kombination folgender Merkmale gelöst:
der Trichter des becherförmigen Einsatzes ist als Hohlkegelstumpf ausgeführt,
der Kegelwinkel des Trichters ist 1 bis 5 Grad kleiner als der Kegelwinkel des zentrierenden Profiles,
der Trichter besteht aus einem elastisch verformbarem Material.

Der becherförmige Einsatz ermöglicht, den Klemmhalter aus einem preisgünstigerem Material zu fertigen und lediglich für den becherförmigen Einsatz ein hochwertiges, federndes Material zu verwenden. Dadurch wird die Bearbeitung wesentlich vereinfacht, da es sich bei dem becherförmigen Einsatz im wesentlichen um ein Drehteil handelt, das gut zu bearbeiten ist. Das gleiche gilt für die Lagerbohrung im Klemmhalter, die ebenfalls einfach und mit hoher Genauigkeit gefertigt werden kann.

Der becherförmige Einsatz besteht aus einem zylindrischen Ansatz, der in die Lagerbohrung des Klemmhalters eingesetzt wird und einem darüber angeordnetem Trichter, der den Kegelstumpfansatz der Schneidplatte, also das zentrierende Profil, aufnimmt. Der grundlegende Unterschied zum Stand der Technik ist jedoch, daß der Kegelwinkel des Trichters kleiner ist als der Kegelwinkel des zentrierenden Profiles, so daß beim Einlegen der Rundschneidplatte ihre Auflagefläche nicht den Boden des Trichters erreicht, sondern sich eine ringförmige Berührung zwischen dem Trichterrand und dem Kegelstumpfmantel ergibt. Aufgrund des geringen Winkelunterschiedes der beiden Kegelwinkel von 1 bis 5 Grad ist der zwischen Trichterboden und Schneidplattenauflagefläche entstehende Freiraum minimal. Da der Trichter jedoch aus einem elastisch verformbarem Material besteht, federt beim Einpressen der Rundschneidplatte in den Trichter der Trichterrand auseinander, damit gleitet der Kegelstumpf, geführt von der Trichterinnenwand, nach unten und wird auf dem Trichterboden durch den Anpreßdruck der Spannpratze gepreßt und in seiner Lage fixiert.

Soll die elastische Verformbarkeit des Trichters vergrößert werden, um dadurch ggf. noch größere Kegelwinkeldifferenzen ausgleichen zu können, so sieht eine bevorzugte Ausgestaltung der Erfindung vor, daß der Trichter durch Einschnitte in Federsegmente aufgeteilt ist.

Eine vorteilhafte Ausgestaltung der Erfindung sieht vor, daß der zylindrische Ansatz des becherförmigen Einsatzes mit Gewinde versehen ist, das in die in diesem Fall ebenfalls mit Gewinde versehene Lagerbohrung eingreift. Der becherförmige Einsatz kann dadurch sehr leicht durch einfaches Einschrauben in den Klemmhalterkopf montiert werden.

In einer bevorzugten Ausgestaltungsform der Erfindung wird der zylindrische Ansatz durch eine Schraube gebildet, die den Trichter des becherförmigen Einsatzes und die Lagerbohrung des Klemmhalters durchgreift. Die Führung des becherförmigen Einsatzes wird dabei entweder durch den zylindrischen Schraubenkopf oder durch einen zylindrischen Ansatz unterhalb des Schraubenkopfes übernommen.

Eine bevorzugte Ausgestaltung der Erfindung sieht vor, daß der Boden des Trichters einen größeren Durchmesser als die Auflagefläche der Schneidplatte aufweist. Dadurch wird sichergestellt, daß die Schneidplatte in jedem Fall auf den Boden gepreßt werden kann und nicht vorzeitig im Bereich der Trichterwandung hängenbleibt.

Eine vorteilhafte Ausgestaltung der Erfindung sieht vor, daß der Boden des Trichters mit einer entlang seiner Peripherie verlaufenden Ringnut versehen ist. Zweckmäßig erstrecken sich dabei die Einschnitte durch die Wandung des Trichters hindurch in die Ringnut. Die Ringnut nimmt die Kante der Auflagefläche der Rundschneidplatte auf, so daß diese nicht angefast werden muß. Das Durchführen der Einschnitte bis in die Ringnut oder ggf. sogar darüberhinaus erleichtert die Federwirkung der Federsegmente, d. h., daß sich die Federkraft auf einen größeren Bereich der Segmente verteilt.

Zweckmäßig besteht der Trichter aus mindestens sechs Federsegmenten, die bevorzugt eine Breite zwischen 0,4 und 13,0 mm aufweisen. Durch die Aufteilung des Trichters in mindestens sechs Federsegmente wird sichergestellt, daß eine weitgehend allseitige Berührung des Kegelstumpfmantels der Schneidplatte erfolgt. Die Beschränkung der Breite der Federsegmente ergibt in Verbindung mit dem gewählten Material des becherförmigen Einsatzes die erforderliche Federkraft.

Die Erfindung wird nachstehend anhand der Zeichnungen beschrieben:

Fig. 1 zeigt eine perspektivische, explosionsförmige Darstellung eines Klemmhalters mit Rundschneidplatte,

Fig. 2 zeigt einen Vertikalschnitt durch die Anordnung kurz vor dem Spannen durch die Pratze,

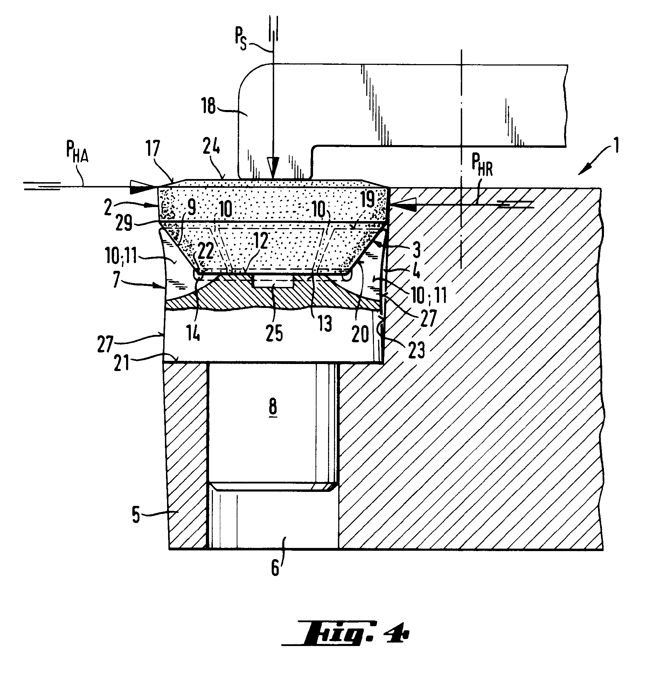

Fig. 3 zeigt eine Draufsicht auf den becherförmigen Einsatz,

Fig. 4 zeigt einen Vertikalschnitt, ähnlich der Figur 2 bei gespannter Spannpratze, also im geklemmten Zustand,

Fig. 5 zeigt einen Vertikalschnitt durch eine abgewandelte Ausführungsform im nichtgespannten Zustand der Spannpratze,

Fig. 6 zeigt die Ausführungsform nach Fig. 5 im gespannten Zustand,

Fig. 7 zeigt eine dritte Ausführungsform im nichtgespannten Zustand,

Fig. 8 zeigt die Ausführung nach Fig. 7 im gespannten Zustand,

Fig. 9 zeigt eine weitere Ausführungsform im gespannten Zustand.

Der Klemmhalter (1) weist einen abgewinkelten Klemmhalterkopf (5) auf, in dem sich die Ausnehmung (4) befindet, die zur Aufnahme des becherförmigen Einsatzes (7) dient. Von der Oberfläche (21) der Ausnehmung (4) erstreckt sich die Lagerbohrung (6) nach unten, die den zylindrischen Ansatz (8) des becherförmigen Einsatzes (7) aufnimmt.

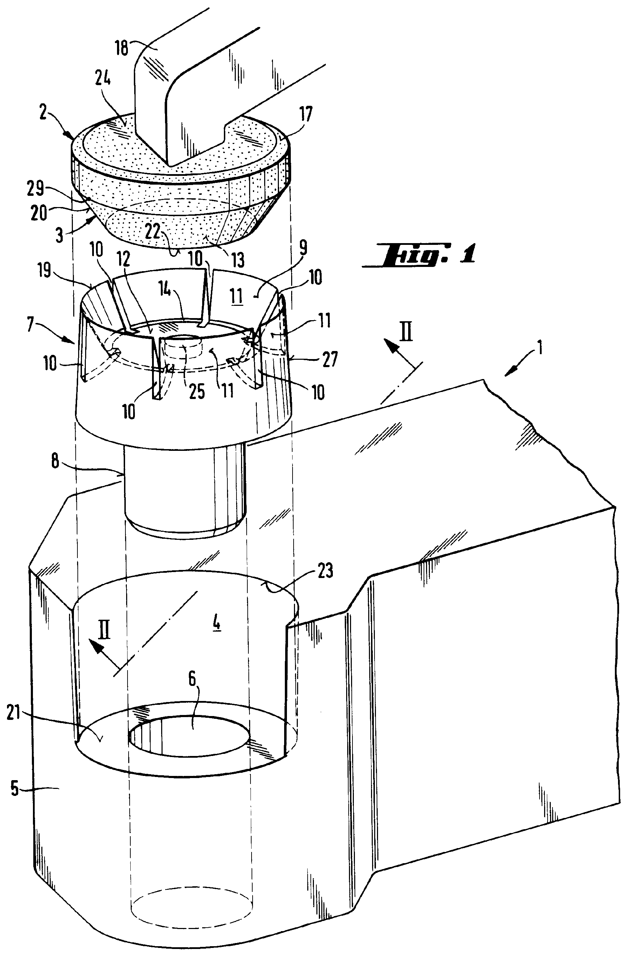

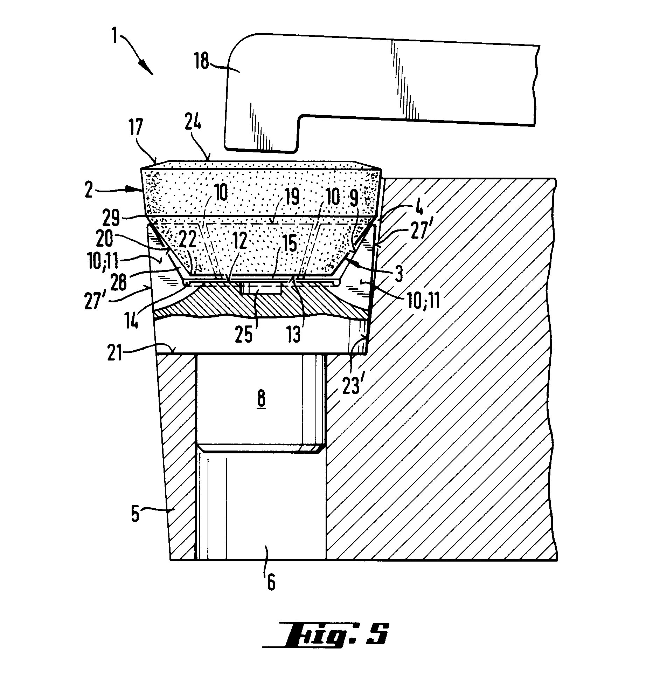

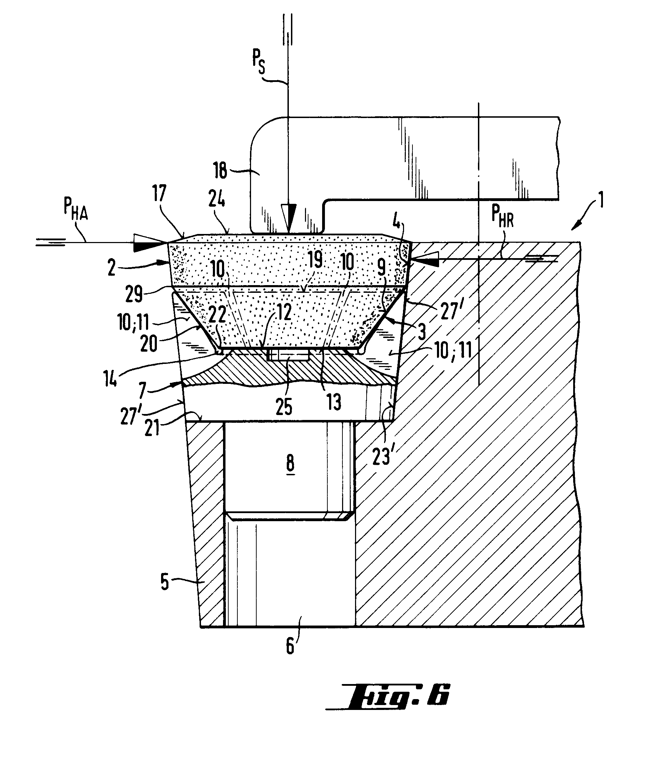

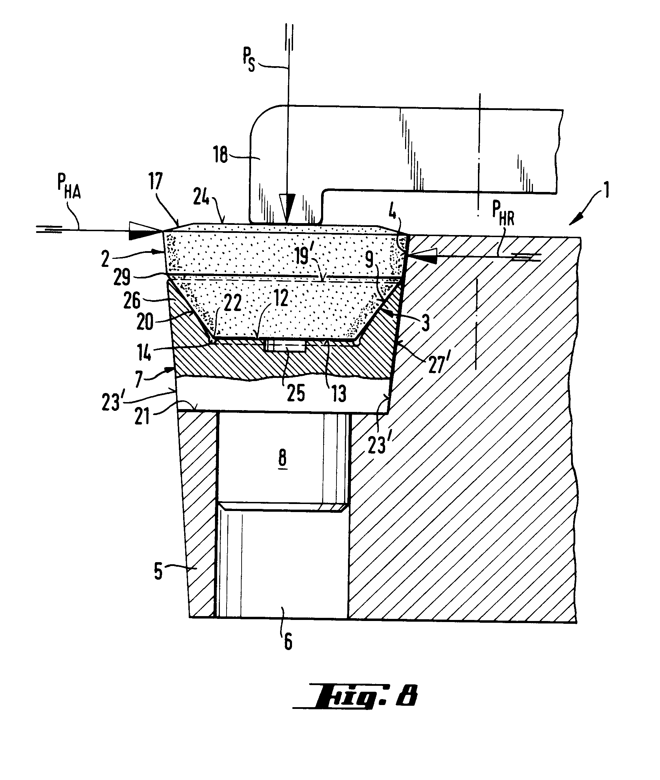

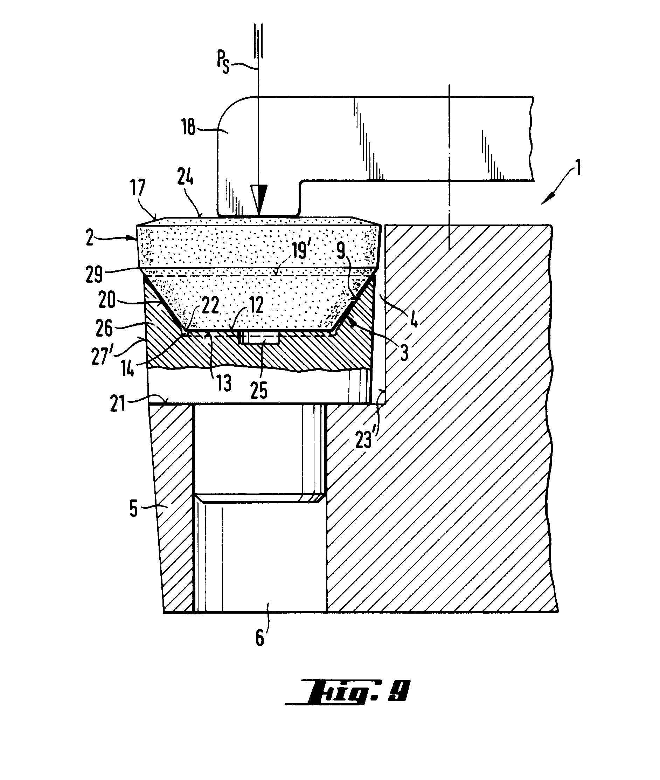

Der becherförmige Einsatz (7) besteht aus einem zylindrischen Ansatz (8), auf den der Trichter (9) aufgesetzt ist. Dieser Trichter (9) kann, wie in den Fig. 1, 2 und 4 gezeigt, als Außenkontur (27, 27') die sich nach oben verjüngende Form eines Kegelstumpfes aufweisen, er kann ferner als Außenkontur (27, 27') die Form eines Zylinders besitzen oder, wie in den Fig. 5, 6 bis 9 dargestellt, als sich von oben nach unten verjüngender Kegelstumpf ausgeführt sein.

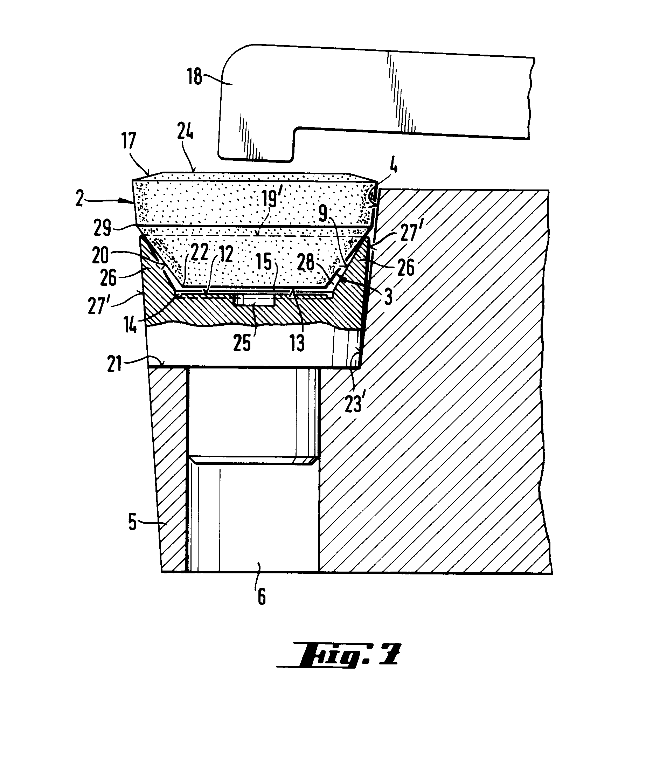

Besteht der becherförmige Einsatz (7) aus einem elastisch verformbaren Material, so ist, wie in den Fig. 7 bis 9 dargestellt, der Trichter (9) mit einem Trichterrand (19') versehen. Beim Einlegen der Rundschneidplatte (2) liegt das kegelstumpfförmige zentrierende Profil (3) auf dem Rand (19') auf - Fig. 7 -. Dadurch ergibt sich zwischen dem Boden (12) des Trichters (9) und der Auflagefläche (13) der Rundschneidplatte (2) ein Freiraum (15). Gleichzeitig ergibt sich ein Luftspalt (28) zwischen dem Kegelstumpfmantel (20) und der Innenwand des Trichters (9).

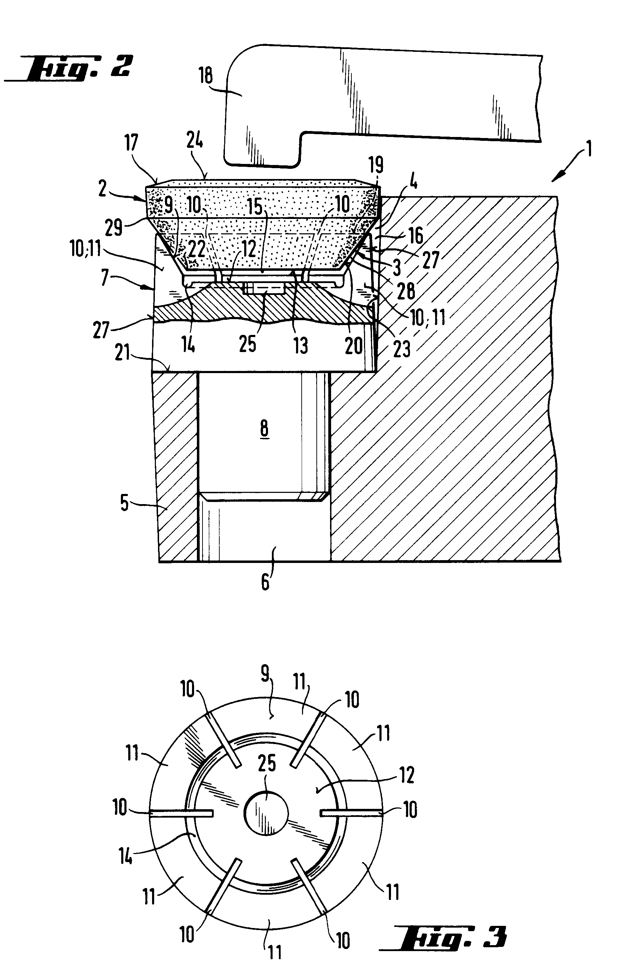

Der Trichter (9) ist, wie die Fig. 1, 2, 4, 5 und 6 zeigen, durch Einschnitte (10) in Federsegmente (11) aufgeteilt. Die Einschnitte (10) erstrecken sich dabei durch die im Randbereich des Bodens (12) verlaufende Ringnut (14). Durch die Vertiefung (25) im Boden (12) bildet der Boden (12) eine ringförmige Auflage für die Auflagenfläche (13) der Rundschneidplatte (2). Wird die Spannpratze (18) durch Spannen der nicht dargestellten Spannschraube auf die Deckfläche (24) der Rundschneidplatte (2), die von der Fase (17) umgeben ist, abgesenkt und die Spannschraube dann weiter gespannt, so drückt die Spannkraft PS die Rundschneidplatte (2) nach unten, bis die Auflagefläche (13) auf dem Boden (12) aufliegt und die Unterkante (22) des zentrierenden Profiles (3) von der Ringnut (14) aufgenommen wird. Der Trichter (9) bzw. (26) wird dabei im Bereich des Trichterrandes (19) bzw. (19') aufgeweitet. Der in Fig. 2 dargestellte Spalt (16) zwischen dem becherförmigen Einsatz (7) und der seitlichen Begrenzung (23) wird dadurch in seiner Form geändert, wie das in stark vergröberter Form in Fig. 4 dargestellt ist. Die umlaufende Kante (29) des zentrierendes Profiles (3) überragt dabei den Trichterrand (19, 19') und verläuft zu diesem parallel. Da außerdem der Trichterrand (19, 19') einen geringeren Außendurchmesser aufweist als der Außendurchmesser der Rundschneidplatte (2) und sich der becherförmige Einsatz (7), ausgehend vom Trichterrand (19, 19'), nach unten verjüngt, wird der durch die Verjüngung der Rundschneidplatte (2) in Richtung zentrierendes Profil (3) gegebene Freiwinkel nicht durch den becherförmigen Einsatz (7) beeinträchtigt.

Wie in den Fig. 4, 6 und 8 dargestellt, liegt die Rundschneidplatte (2) mit ihrem Umfang im rückwärtigen Bereich an der seitlichen Begrenzng (23, 23') der Ausnehmung (4) an. Dadurch wird die auf die Rundschneidplatte (2) wirkende horizontale Kraftkomponente PHA von der zylindrischen Ausnehmung (4), wie in den Fig. 4, 6 und 8 dargestellt, als Reaktionskraft PHR aufgenommen.

Bei Klemmhaltern (1), die für die Aufnahme kleiner Rundschneidplatten (2) konstruiert sind, also die Rundschneidplatten im Bereich bis zu 12 mm Durchmesser aufnehmen, genügt zum Spannen das Einbringen der Rundschneidplatte (2) in den becherförmigen Einsatz (7). Dadurch ist es möglich, die Ausnehmung (4) im Klemmhalter (1) größer, d. h. mit gröberer Toleranz, zu fertigen, so daß zwischen dem Umfang der Rundschneidplatte (2) und der Ausnehmung (4'), die in diesem Falle als zylindrische Ausnehmung ausgeführt ist, Spiel vorhanden ist.

**Patentansprüche**

1. Werkzeng, das einen becherförmigen Einsatz, eine Rundschneidplatte und einen Klemmhalter (1) aufweist, der im wesentlichen aus einem Schaft mit einem eine Ausnehmung (4) aufweisenden Klemmhalterkopf (5) zur Aufnahme der Rundschneidplatte (2) besteht, die als Unterseite ein zentrierendes Profil (3) aufweisen und mit diesem in die komplementär ausgestaltete Ausnehmung des Klemmhalters (1) eingreifen, wobei der Klemmhalterkopf (5) mit einer Lagerbohrung (6) zur Aufnahme des becherförmigen Einsatzes (7) versehen ist, der becherförmige Einsatz (7) mit einem zylindrischen Ansatz (8) in die Lagerbohrung (6) der Ausnehmung (4) eingreift und das zentrierende Profil (3) der Rundschneidplatte (2) als Kegelstumpf ausgeführt ist, gekennzeichnet durch die Kombination folgender Merkmale:
der Trichter (9) des becherförmigen Einsatzes (7) ist als Hohlkegelstumpf ausgeführt,
der Kegelwinkel des Trichters (9) ist 1 bis 5 Grad kleiner als der Kegelwinkel des zentrierenden Profils (3),
der Trichter (9) besteht aus einem elastisch verformbaren Material.

2. Werkzeng nach Anspruch 1, dadurch gekennzeichnet, daß der zylindrische Ansatz (8) durch eine Maschinenschraube gebildet wird, die die Lagerbohrung (6) und den Trichter (9) durchgreift.

3. Werkzeng nach Anspruch 1, dadurch gekennzeichnet, daß der zylindrische Ansatz (8) mit Außengewinde und die Lagerbohrung (6) mit Innengewinde versehen ist.

4. Werkzeng nach einem der Ansprüche 1 bis 3, dadurch gekennzeichnet, daß der Trichter (9) durch Einschnitte (10) in Federsegmente (11) geteilt ist.

5. Werkzeng nach einem der Ansprüche 1 bis 4, dadurch gekennzeichnet, daß der Boden (12) des Trichters (9) einen größeren Durchmesser aufweist als die Auflagefläche (13) der Schneidplatte (2).

6. Werkzeng nach einem der Ansprüche 1 bis 5, dadurch gekennzeichnet, daß der Boden (12) des Trichters (9) mit einer entlang seiner Peripherie verlaufenden Ringnut (14) versehen ist.

7. Werkzeng nach einem er Ansprüche 1 bis 6, dadurch gekennzeichnet, daß die Einschnitte (10) sich durch die Wandung des Trichters (9) in die Ringnut (14) erstrecken.

8. Werkzeng nach einem der Ansprüche 1 bis 7, dadurch gekennzeichnet, daß der Trichter (9) aus mindestens drei Federsegmenten (11) besteht.

9. Werkzeng nach einem der Ansprüche 1 bis 8, dadurch gekennzeichnet, daß die Breite der Federsegmente (11) zwischen 0,4 und 15,0 mm beträgt.

**Claims**

1. A tool which comprises a cup-shaped insert, a circular cutting plate and a tool holder (1), which tool holder essentially comprises a shaft with a tool holder head (5) having a recess (4) for receiving the circular cutting plate (2) which as its underside has a centering profiled member (3) and by means of this profiled member engages in the recess of the tool holder (1) of complementary configuration, the tool holder head (5) being provided with a bearing bore (6) for receiving the cup-shaped insert (7), the cup-shaped insert (7) engaging by means of a cylindrical projection (8) in the bearing bore (6) of the recess (4) and the centering profiled member (3) of the circular cutting plate (2) being constructed as a truncated cone, characterized by the combination of the following features:

the funnel (9) of the cup-shaped insert (7) is in the form of a hollow truncated cone,

the cone angle of the funnel (9) is 1 to 5 degrees less than the cone angle of the centering profiled member (3),

the funnel (9) consists of a resiliently deformable material.

2. A tool according to claim 1, characterized in that the cylindrical projection (8) is formed by a machine screw which engages through the bearing bore (6) and the funnel (9).

3. A tool according to claim 1, characterized in that the cylindrical projection (8) is provided with an external thread and the bearing bore (6) is provided with an internal thread.

4. A tool according to one of claims 1 to 3, characterized in that the funnel (9) is divided by cuts (10) into resilient segments (11).

5. A tool according to one of claims 1 to 4, characterized in that the base (12) of the funnel (9) has a larger diameter than the seat-engaging surface (13) of the cutting plate (2).

6. A tool according to one of claims 1 to 5, characterized in that the base (12) of the funnel (9) is provided with an annular groove (14) running along its periphery.

7. A tool according to one of claims 1 to 6, characterized in that the cuts (10) extend through the wall of the funnel (9) into the annular groove (14).

8. A tool according to one of claims 1 to 7, characterized in that the funnel (9) consists of at least three resilient segments (11).

9. A tool according to one of claims 1 to 8, characterized in that the width of the resilient segments (11) is between 0.4 and 15.0 mm.

**Revendications**

1. Outil comportant un insert en forme de godet, une plaquette de coupe circulaire et un porte-plaquette (1) qui est formé essentiellement d'une tige avec une tête porte-plaquette (5) munie d'un évidement (4) recevant la plaquette de coupe circulaire (2) dont la face inférieure est agencée en profil de centrage (3) et s'engage par ce profil dans l'évidement de forme complémentaire du porte-plaquette (1), la tête porte-plaquette (5) étant munie d'un alésage (6) pour le montage de l'insert en forme de godet (7), l'insert en forme de godet (7) s'engageant par un téton cylindrique (8) dans l'alésage (6) de l'évidement (4) et le profil de centrage (3) de la plaquette de coupe circulaire (2) ayant la forme d'un tronc de cône, caractérisé par la combinaison des caractéristiques suivantes :

l'entonnoir (9) de l'insert en forme de godet (7) a la forme d'un tronc de cône évidé,

l'angle de cône de l'entonnoir (9) est inférieur de 1 à 5 degrés à l'angle de cône du profil de centrage (3),

l'entonnoir (9) est réalisé en un matériau élastiquement déformable.

2. Outil selon la revendication 1, caractérisé en ce que le téton cylindrique (8) est une vis qui traverse l'alésage (6) et l'entonnoir (9).

3. Outil selon la revendication 1, caractérisé en ce que le téton cylindrique (8) est muni d'un filetage extérieur et l'alésage (6) est muni d'un filetage intérieur.

4. Outil selon l'une des revendications 1 à 3, caractérisé en ce que l'entonnoir (9) est divisé en segments élastiques (11) par des entailles (10).

5. Outil selon l'une des revendications 1 à 4, caractérisé en ce que le diamètre du fond (12) de l'entonnoir (9) est supérieur au diamètre de la face d'appui (13) de la plaquette de coupe (2).

6. Outil selon l'une des revendications 1 à 5, caractérisé en ce que le fond (12) de l'entonnoir (9) est muni d'une gorge annulaire (14) qui s'étend le long de sa périphérie.

7. Outil selon l'une des revendications 1 à 6, caractérisé en ce que les entailles (10) s'étendent à travers la paroi de l'entonnoir (9) dans la gorge annulaire (14).

8. Outil selon l'une des revendications 1 à 7, caractérisé en ce que l'entonnoir (9) est formé d'au moins trois segments élastiques (11).

9. Outil selon l'une des revendications 1 à 8, caractérisé en ce que la largeur des segments élastiques (11) est comprise entre 0,4 et 15,0 mm.

**Fig. 1**

Fig. 2

Fig. 3

**Fig. 4**

**Fig. 5**

$P_S$

$P_{HA}$

18

17

24

$P_{HR}$

1

2

29

10;11

20

14

7

27'

21

10

19

10

9

4

27'

3

10;11

23'

22

12

25

13

8

5

6

## Fig. 6

*Fig. 7*

$P_S$

18

$P_{HA}$

17

24

4

1

$P_{HR}$

2

19'

9

29

26

22

12

3

20

14

27'

7

25

13

23'

21

23'

8

5

6

# Fig. 8

$P_S$

18

17
24
2
29
20
26
27'
14
21
5

19'   9
22   12
13   25

1
4
3
23'

6

**Fig. 9**